# EUROPÄISCHE PATENTSCHRIFT

(11) **EP 1 092 958 B1**
(45) Veröffentlichungstag und Bekanntmachung des Hinweises auf die Patenterteilung: **17.11.2004**
(21) Anmeldenummer: 00120850.3
(22) Anmeldetag: 25.09.2000
(51) Int. Cl.: G01F 1/00, G01F 23/18

(54) **Verfahren und Vorrichtung zur Bestimmung einer Pulvermenge oder Pulvermengenänderung in einem Behälter**
Method and device for measuring the quantity of powder or the change of the quantity of powder in a container
Procédé et dispositif de mesure d'une quantité de poudre ou d'un changement de quantité de poudre dans un réservoir

(30) Priorität: 14.10.1999 DE 19949659
(43) Veröffentlichungstag der Anmeldung: 18.04.2001
(73) Patentinhaber: WAGNER INTERNATIONAL AG, 9450 Altstätten (CH)
(72) Erfinder: Seitz, Kurt, 9443 Widnau (CH); Adams, Horst, Dr., 9450 Altstätten (CH)
(74) Vertreter: Liesegang, Eva

(56) Entgegenhaltungen:
- EP-A- 0 297 309
- DE-A- 3 039 210
- DE-A- 4 344 701
- DE-A- 4 406 046
- PATENT ABSTRACTS OF JAPAN vol. 006, no. 192 (P-145), 30. September 1982 (1982-09-30) & JP 57 103017 A (UNITIKA LTD), 26. Juni 1982 (1982-06-26)

## Beschreibung

Die Erfindung betrifft ein Verfahren und eine Vorrichtung zum Bestimmen einer Pulvermenge oder Pulvermengenänderung in einem Behälter. Die Erfindung ist insbesondere auf das Gebiet der Pulverbeschichtung anwendbar, um einen Pulvermassestrom, der zu einem Beschichtungsgerät gefördert und von diesem versprüht wird, zu erfassen und zu regeln.

Zur Versorgung von Pulverbeschichtungsgeräten, beispielsweise in elektrostatischen Beschichtungsanlagen, mit Beschichtungspulver wird das Pulver fluidisiert, d.h. das Pulver wird mit einem Gas, vorzugsweise Luft durchsetzt, um ein Pulver-Luft-Gemisch zu bilden, und dieses Pulver-Luft-Gemisch wird durch Förderleitungen den Beschichtungsgeräten zugeführt. Dabei kann es notwendig werden, die tatsächlich geförderte und ausgebrachte Pulvermenge pro Zeiteinheit, d.h. den Pulver-Massestrom (in g/min), während des Betriebes der Beschichtungsanlage zu ermitteln, um beispielsweise den Pulvermassestrom auf einen gewünschten Wert einzustellen oder um einen eingestellten Wert mit Hilfe einer Regelung einhalten zu können.

Aus dem Stand der Technik sind Einrichtungen zum Messen eines Pulvermassestoms bekannt, um die von einem Beschichtungsgerät abgegebene Pulvermenge zu ermitteln. In der EP-A-0 297 309 sind ein Verfahren und eine Einrichtung zur Messung und Regelung der Pulvermenge welche pro Zeiteinheit einer Sprühbeschichtungseinrichtung zugeführt wird, in einer Pulverbeschichtungsanlage beschrieben. Bei dem beschriebenen Verfahren wird die Dichte (a) des Pulvers im Pulver-Gas-Strom von einer Strahlenmeßeinrichtung gemessen, die Gasmenge pro Zeiteinheit (b) im Pulver-Gas-Strom wird ermittelt, und die geförderte Pulvermenge pro Zeiteinheit (c) wird aus der Gleichung c = a · b bestimmt.

Ein weiteres Beispiel für die Messung eines Pulvermassestroms, der zu einem Beschichtungsgerät gefördert wird, ist in der DE-A-4 406 046 beschrieben. Die dort beschriebene Einrichtung mißt zwei Parameter, nämlich die Geschwindigkeit V des Pulver-Luft-Gemisches in der Förderleitung in m/sec und die Pulvermasse pro Volumeneinheit Mv in der Förderleitung in g/cm³. Aus dem Produkt aus Pulverdichte und Geschwindigkeit des Pulver-Luft-Stroms kann der Pulvermassestrom und somit die Pulvermenge berechnet werden, die zu dem Beschichtungsgerät gefördert und von diesem versprüht wird. Die Messung der Geschwindigkeit erfolgt mittels zweier mit Abstand zueinander angeordneter Meßelektroden, welche von dem geförderten Pulver-Gas-Gemisch erzeugte Ladungsschwankungen an der Förderleitung erfassen. Die Messung der Pulvermasse proVolumeneinheit erfolgt mithilfe eines Resonators, welcher eine Änderung der Dielektrizitätskonstante und/oder der Absorption in einem Resonanzvolumen der Förderleitung als eine Verschiebung der Resonanzfrequenz erfaßt.

Eine andere Art der Messung der versprühten Pulvermenge basiert auf der Erfassung der Gewichtsänderung eines Pulvervorratsbehälters. Das Gewicht des Pulvervorratsbehälters wird mit Hilfe einer Waage ermittelt, und während Pulver aus dem Pulvervorratsbehälter zu den Beschichtungsgeräten gefördert und von diesen versprüht wird, wird das Gewicht des Pulvervorratsbehälters laufend gemessen, um die versprühte Pulvermenge über der Zeit zu erfassen. Eine derartige Messung des Pulverausstoßes an Pulverspritzanlagen ist aus der DE 43 44 701 A1 bekannt.

Die bekannten Meßverfahren benötigen Meßeinrichtungen, wie eine Waage oder einen Resonator und Meßelektroden, die relativ aufwendig und teuer sind.

Die DE 30 39 210 C3 beschreibt eine Vorrichtung für die Anzeige der Schüttdichte und Füllhöhe von körnigen Katalysatoren in einem Wirbelschichtreaktor, wobei an dem Reaktor mehrere Meßrohre von Druckdifferenz-Meßgeräten angeordnet sind. Mit Hilfe eines ersten Druckdifferenz-Meßgerätes wird die Schüttdichte berechnet und angezeigt, und mit Hilfe eines zweiten Druckdifferenz-Meßgerätes und der zuvor ermittelten Schüttdichte wird die Füllhöhe berechnet und angezeigt.

JP-A-57103017 beschreibt eine Vorrichtung und ein Verfahren zum Steuern der Versorgungsmenge.

Es ist daher eine Aufgabe der Erfindung, eine Vorrichtung und ein Verfahren zum Messen einer Pulvermenge anzugeben, welche mit möglichst geringem Aufwand zuverlässige Ergebnisse liefern.

Diese Aufgabe wird durch ein Verfahren mit den Merkmalen von Anspruch 1 sowie durch eine Vorrichtung mit den Merkmalen von Anspruch 14 gelöst.

Das erfindungsgemäße Verfahren eignet sich sowohl zum Bestimmen einer Pulvermenge in einem Behälter als auch zum Bestimmen einer Pulvermengenänderung, also der Pulvermenge, die aus dem oder in den Behälter gefördert wird. Das Pulver wird in dem Behälter fluidisiert, der Druck des fluidisierten Pulvers in dem Behälter wird gemessen, um den Druck des fluidisierten Pulvers bzw. die Änderung des Drucks zwischen jeweils zwei Messungen zu ermitteln, wobei aus dem Druck bzw. der Druckänderung die Pulvermenge berechnet wird, die sich in dem Behälter befindet bzw. zwischen zwei Messungen aus dem Behälter gefördert wurde.

Mit dem erfindungsgemäßen Verfahren ist es durch eine einfache Druckmessung möglich, die Pulvermenge, welche pro Zeiteinheit aus einem Behälter gefördert und von einem Beschichtungsgerät versprüht wird, und somit den geförderten Pulvermassestrom zu ermitteln. Eine Waage oder andere aufwendige Meßeinrichtungen sind nicht nötig.

Die Erfindung nutzt die Tatsache aus, daß sich über der Fluidisiereinrichtung in dem Behälter aufgrund des fluidisierten Pulvers ein sogenannter Fluidisierdruck einstellt. Da sich fluidisiertes Pulver weitgehend wie eine Flüssigkeit verhält, gelten zum Teil auch die physikalischen Eigenschaften von Flüssigkeiten. Wie bei einer Flüssigkeit herrscht in dem fluidisierten Pulver proportional zur Tiefe ein bestimmter Druck; dieser Fluidisierdruck ist nur abhängig von der Pulversorte und der sich im Behälter befindlichen Pulvermenge. Nimmt die Pulvermenge bzw. die Tiefe des fluidisierten Pulvers in dem Behälter zu oder ab, dann nimmt auch der Druck in dem Behälter proportional hierzu zu bzw. ab. Dieser Effekt kann zur Bestimmung der Füllmenge bzw. zur Bestimmung der Änderung der Füllmenge in einem Pulverbehälter ausgenutzt werden.

Mit dem erfindungsgemäßen Verfahren kann somit die Pulvermenge in einem Pulvervorratsbehälter in absoluten Zahlen oder die Änderung der Pulvermenge in dem Pulverbehälter aufgrund der Druckverhältnisse in dem Behälter berechnet werden. Ferner eignet sich das erfindungsgemäße Verfahren in entsprechender Anwendung auch zur Bestimmung der Höhe oder Höhenänderung des fluidisierten Pulvers in dem Behälter.

Die Messung der Pulvermenge in dem Behälter aufgrund des Fluidisierdrucks kann auf einfache Weise kalibriert werden, indem eine bekannte Pulvermenge in den Behälter gegeben wird und die Druckzunahme, die sich durch die Zugabe der bekannten Pulvermenge ergibt, gemessen wird. Aus dem Verhältnis aus bekannter Pulvermenge und Druckzunahme kann bei nachfolgenden Messungen des Drucks die Pulvermenge bzw. Pulvermengenänderung im Behälter aus dem gemessenen Druck abgeleitet werden.

Die Erfindung sieht auch eine Vorrichtung zum Bestimmen einer Pulvermenge in einem Behälter vor, die eine Fluidisiereinrichtung in dem Behälter, eine Fördereinrichtung zum Fördern von Pulver aus dem Behälter, eine Druckmeßeinrichtung zum Messen des Drucks des fluidisierten Pulvers in dem Behälter und eine Recheneinrichtung zum Berechnen einer Pulvermenge abhängig von dem Druck des fluidisierten Pulvers in dem Behälter umfaßt. Diese Vorrichtung kann zum Bestimmen der Pulvermenge oder der Pulvermengenänderung in dem Behälter eingesetzt werden.

Die Erfindung ist im folgenden anhand bevorzugter Ausführungsformen mit Bezug auf die Zeichnungen näher erläutert. In den Figuren zeigen:
- Fig. 1: das Funktionsprinzip der erfindungsgemäßen Vorrichtung zum Bestimmen einer Pulvermenge in einem Behälter;
- Fig. 2: ein Zeitablaufdiagramm der Veränderung der Pulvermenge in dem Behälter, und
- Fig. 3: eine schematische Struktur zur Erläuterung des erfindungsgemäßen Verfahrens zur Versorgung mehrerer Beschichtungsgeräte.

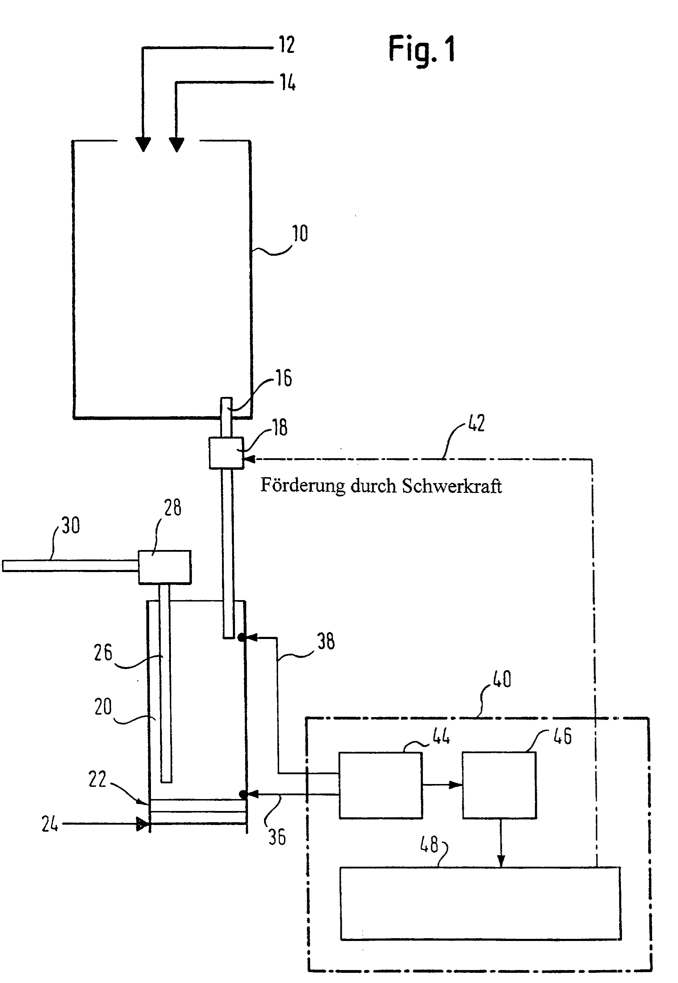

Figur 1 zeigt schematisch einen Teil einer Pulverbeschichtungsanlage zur Erläuterung des Funktionsprinzips des erfindungsgemäßen Verfahrens zum Bestimmen einer Pulvermenge bzw. einer Pulvermengenänderung in einem Behälter.

In Fig. 1 ist ein Pulvervorratsbehälter 10 dargestellt, dem Frischpulver 12 und zurückgewonnenes Recyclingpulver 14 zugeführt werden. Das Pulver wird in dem Pulvervorratsbehälter 10 fluidisiert (nicht gezeigt) und über eine Zuführleitung 16 und ein Ventil 18, z.B. ein Quetschventil, einem weiteren Pulverbehälter 20, der als ein Zwischen- oder Meßbehälter dient, zugeführt. Der Pulverbehälter 20 weist einen Fluidisierboden 22 mit einem Fluidisierluftzugang 24 auf. In den Pulverbehälter 20 ist ein Ansaugrohr 26 eingeführt, das über einen Injektor 28 mit einem Pulverförderschlauch 30 verbunden ist, der zu einem Beschichtungsgerät (nicht gezeigt) führt. An dem Pulverbehälter 20 sind eine untere Druckmeßleitung 36 und eine obere Druckmeßleitung 38 angebracht, die zu einem Differenzdrucksensor 44 in einer Steuer- und Meßelektronik 40 führen. Von der Steuer- und Meßelektronik 40 führt ferner eine Steuerleitung 42 zu dem Ventil 18. Die Steuer- und Meßelektronik weist neben dem Differenzdrucksensor 44 einen Meßverstärker 46 und eine Auswerte- und Steuerelektronik 48 auf. Vorzugsweise umfaßt die Auswerte- und Steuerelektronik 48 auch eine Regeleinheit zur Regelung der Pulverförderung. Der Differenzdrucksensor 44 erzeugt ein Ausgangssignal, das der Druckdifferenz in dem Pulverbehälter 20 entspricht:

Anstelle des Differenzdrucksensors 44 können bei einer alternativen Ausführungsform der Erfindung auch zwei Drucksensoren (nicht gezeigt) vorgesehen sein, wobei ein unterer und ein oberer Drucksensor die Drücke im unteren bzw. oberen Bereich des Behälter 20 messen. Die Ausgangssignale dieser Drucksensoren werden einer elektrischen oder elektronischen Subtrahierschaltung (nicht gezeigt) zugeführt, welche die Druckdifferenz zwischen den Sensoren und somit im Behälter ermittelt.

Die Erfindung ist im folgenden anhand eines Ausführungsbeispiels näher beschrieben, bei dem ein Beschichtungsgerät (nicht gezeigt) aus dem Pulverbehälter 20 versorgt wird. Der Pulverbehälter 20 wird über die Förderleitung 16 und das Ventil 18 aus dem Pulvervorratsbehälter 10 mit Pulver versorgt, wobei das Pulver in dem Behälter 20 über den Fluidisierboden 22 fluidisiert wird. Es wird sichergestellt, daß das Niveau des fluidisierten Pulvers einen oberen und einen unteren Grenzwert (nicht gezeigt) nicht über- bzw. unterschreitet, wie unten noch erläutert ist. Der Injektor 28 fördert über das Ansaugrohr 26 und den Pulverschlauch 30 das fluidisierte Pulver zu dem Beschichtungsgerät (nicht gezeigt), wobei während der Druckmessung kein Pulver aus dem Pulvervorratsbehälter 10 in den Pulverbehälter 20 nachgefüllt wird, um das Meßergebnis nicht zu verfälschen. Die Verringerung der Pulvermenge in dem Behälter 20 ist begleitet von einer entsprechenden Verminderung des Fluidisierdrucks über dem Fluidisierboden 22. Durch Erfassen des Fluidisierdrucks in dem Behälter 20 mit Hilfe des Differenzdrucksensors 44 sowie der zeitlichen Veränderung des Fluidisierdrucks kann bei entsprechender Kalibrierung der Auswerte- und Steuerelektronik 48 die Pulvermenge im Behälter 20 bzw. deren Änderung erfaßt werden. Daraus läßt sich unmittelbar die Menge des zum Beschichtungsgerät geförderten Pulvers, z.B. in g/min, berechnen.

Fig. 1 zeigt eine untere Druckmeßleitung 36 und eine obere Druckmeßleitung 38, die mit dem Differenzdrucksensor 44 verbunden sind, um einen Differenzdruck zwischen einer Position unmittelbar über dem Fluidisierboden 22, also unter dem fluidisierten Pulver, und einer Position in dem oberen Bereich des Pulverbehälters 20 abzuleiten. Dieser Differenzdruck entspricht dem durch das fluidisierte Pulver in dem Pulverbehälter 20 erzeugten Druck und macht das Meßsystem unempfindlich gegen Schwankungen des Umgebungsdrucks. Wenn der Umgebungsdruck bekannt ist, kann der Differenzdrucksensor 44 auch durch einen einzelnen Drucksensor auf der Höhe des Fluidisierbodens 22 ersetzt werden, und der durch das fluidisierte Pulver im Pulverbehälter 20 erzeugte Druck kann durch Subtraktion des Umgebungsdrucks von dem Meßwert des unteren Drucksensors (nicht gezeigt) berechnet werden.

Zur Berechnung der Menge bzw. Mengenänderung des Pulvers im Pulverbehälter 20 abhängig vom Fluidisierdruck wird eine einfache Kalibrierung der Steuer- und Meßelektronik 40 vorgenommen. Hierzu wird der normale Förderbetrieb unterbrochen, d.h. der Injektor 28 fördert kein Pulver aus dem Pulverbehälter 20, und über die Förderleitung 16 wird dem Pulverbehälter 20 ebenfalls kein Pulver zugeführt. Der Fluidisierdruck im Pulverbehälter 20 wird gemessen, und danach wird eine genau abgewogene Menge des verwendeten Pulvers in den Pulverbehälter 20 gefüllt, z.B. 200 g Pulver. Der sich aufgrund der veränderten Pulvermenge einstellende neue Fluidisierdruck wird wiederum gemessen, und die Druckzunahme, die der zugegebenen Pulvermenge (200 g) entspricht, wird gespeichert. Dadurch "lernt" die Steuerund Meßelektronik 40 den Zusammenhang zwischen Pulvermenge und Fluidisierdruck.

Das beschriebene Meßverfahren eignet sich für die Absolutmengenmessung in dem Pulverbehälter 20 sowie für die Messung kleiner und großer Fördermengen des Pulvers zum Beschichtungsgerät. Für eine genaue Messung kleiner Fördermengen sollte die Grundfläche des Pulverbehälters 20 vergleichsweise klein sein, damit eine kleine Änderung der Pulvermenge im Pulverbehälter 20 zu einer ausreichenden Höhenänderung und somit Druckänderung in dem Behälter 20 führt. Bei großen Pulverausstoßmengen kann der Pulverbehälter 20 eine entsprechend größere Grundfläche aufweisen.

Wie oben erläutert, ist eine Voraussetzung für die präzise Messung der Pulvermenge, die aus dem Pulverbehälter 20 gefördert wird, daß dem Behälter 20 während der Messung kein Pulver zugeführt wird. Das Pulverniveau in dem Behälter 20 sinkt daher kontinuierlich, und bei Erreichen eines unteren Grenzwertes für das Pulverniveau sollte die Messung gestoppt und die Nachförderung aus dem Pulvervorratsbehälter 10 eingeschaltet werden. Während dieser Nachförderung kann keine Messung des über den Injektor 23 aus dem Behälter 20 geförderten Pulvers erfolgen. Die erfindungsgemäße Meßvorrichtung kann jedoch bei dem Nachfüllen von Pulver in den Pulverbehälter 20 unter gleichzeitiger Fluidisierung des zugeführten Pulvers dazu verwendet werden, das Pulverniveau in dem Pulverbehälter 20 zu erfassen und die Nachförderung zu stoppen, wenn ein vorgegebenes oberes Pulverniveau erreicht ist.

Die Abhängigkeit des Pulverniveaus von dem Fluidisierdruck kann auf ähnliche Weise empirisch ermittelt werden, wie oben in bezug auf die Pulvermenge erläutert ist. Wenn bei der Nachförderung ein gewünschtes Pulverniveau im Pulverbehälter 20 erreicht wird, wird das Ventil 18 geschlossen, und die Messung der Menge des Pulvers, das über den Injektor 28 aus dem Pulverbehälter 20 gefördert wird, kann fortgesetzt werden.

Mit dem erfindungsgemäßen Verfahren erreicht man somit zwar keine ununterbrochene Bestimmung der aus dem Pulverbehälter 20 geförderten Pulvermenge; bei geeigneter Auslegung von Meßzeit und Nachfüllzeit, kann jedoch ein prozentualer Anteil der Meßzeit zur Nachfüllzeit von bis zu 90% erreicht werden.

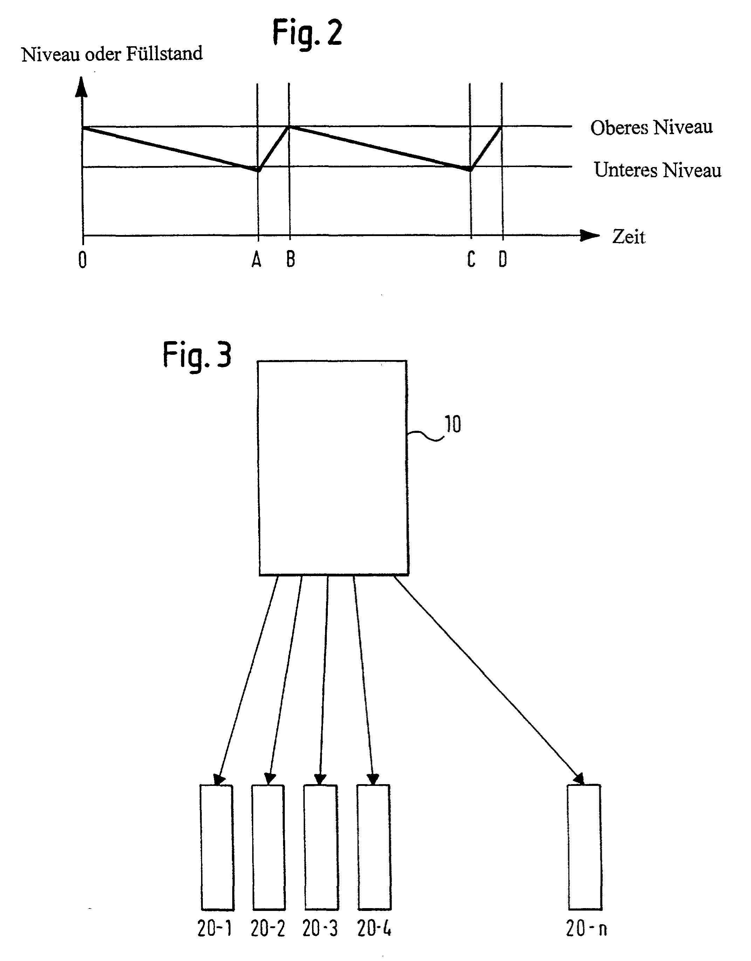

Fig. 2 zeigt ein Zeitablaufdiagramm des Füllstands im Pulverbehälter 20, wobei abwechselnd Pulver aus dem Behälter 20 gefördert und in diesen nachgefüllt wird. Vom Zeitpunkt 0 bis zum Zeitpunkt A fördert der Injektor 28 kontinuierlich Pulver aus dem Pulverbehälter 20, so daß sich bis zum Zeitpunkt A das Pulverniveau bzw. die Pulvermenge im Behälter 20 kontinuierlich verringert. Im Zeitraum 0 bis A wird die aus dem Pulverbehälter 28 geförderte Pulvermenge pro Zeiteinheit wie oben erläutert ermittelt. Zum Zeitpunkt A ist ein unteres Niveau im Pulverbehälter 20 erreicht, die Messung der aus dem Behälter 20 geförderten Pulvermenge wird unterbrochen, und die Nachförderung von frischem Pulver aus dem Pulvervorratsbehälter 10 wird gestartet. Wie aus Fig. 1 ersichtlich, wird hierzu das Ventil 18, zum Beispiel ein Quetschventil, geöffnet. Auch während des Nachfüllens von Pulver in den Pulverbehälter 20 muß die Pulvermenge bzw. das Pulverniveau im Behälter überwacht werden. Dies kann mit Hilfe des Differenzdrucksensors 44 wie oben beschrieben oder auf andere, herkömmliche Weise erfolgen. Die Nachfüllperiode entspricht dem Zeitraum zwischen A und B, wobei zum Zeitpunkt B die Meßvorrichtung ermittelt, daß ein oberes Pulverniveau in dem Pulverbehälter 20 erreicht ist, und das Ventil 18 wird geschlossen. Nun kann zwischen den Zeitpunkten B und C eine weitere Meßperiode folgen, in der die Pulvermenge erfaßt wird, welche von dem Injektor 28 aus dem Pulverbehälter 20 gefördert wird. Dieser Vorgang wiederholt sich fortlaufend, wobei die aus dem Vorratsbehälter 10 nachgefüllte Pulvermenge pro Zeiteinheit deutlich größer sein sollte als die von dem Injektor 28 aus dem Pulverbehälter 20 geförderte Pulvermenge, um die Nachfüllperiode so kurz wie möglich zu halten.

Während der gesamten Zeit, d.h. während des Nachfüllens zwischen den Zeitpunkten A und B und C und D und während der Pulverförderung aus dem Pulverbehälter 20 zwischen den Zeitpunkten 0 und A und B und C kann die Pulverförderung durch den Injektor 28 in Betrieb sein, wobei eine zuverlässige Messung der abgegebenen Pulvermenge jedoch nur in den Intervallen O bis A und B bis C möglich ist.

Die Pulvermenge im Pulverbehälter 20 bzw. die aus dem Behälter 20 geförderte Pulvermenge können angezeigt und/oder an einen Pulvermengenregler (nicht gezeigt) als Istwert übergeben werden. Mithilfe der Ist-Pulvermenge im Pulverbehälter 20 kann der Pulvermengenregler das Nachfüllen des Pulverbehälters 20 abhängig vom Pulverniveau in dem Behälter steuern. Ein weiterer Pulvermengenausstoßregler (nicht gezeigt) kann den Injektor 28 ansteuern, um eine gewünschte Pulverausstoßmenge zu dem Beschichtungsgerät zu fördern.

Fig. 3 zeigt schematisch eine Anordnung aus einem Pulvervorratsbehälter 10 und mehreren Meßbehältern 20-1 bis 20-n zur Versorgung mehrerer Beschichtungsgeräte (nicht gezeigt). Das erfindungsgemäße Verfahren und die Vorrichtung wurden oben anhand eines Förderinjektors und eines Beschichtungsgerätes, das Pulver von dem Pulverbehälter 20 erhält, erklärt. Bei einer Pulverbeschichtungsanlage mit mehreren Förderinjektoren und Beschichtungspistolen benötigt zur Umsetzung des erfindungsgemäßen Verfahrens jede Beschichtungspistole einen eigenen Meßbehälter 20-1 bis 20-n und eine separate Zuführung, einschließlich Ventil, für die Nachförderung vom Vorratsbehälter zu den Meßbehälter 20-1 bis 20-n. Da die aus dem Pulverbehälter 20 zur Beschichtungspistole geförderte Pulvermenge allein aufgrund der Abnahme der Pulvermenge im Pulverbehälter 20 ermittelt wird, kann eine zuverlässige Messung nur unter der Bedingung erfolgen, daß während der Messung des zum Beschichtungsgerät geförderten Pulvermassestroms dem Pulverbehälter 20 nicht gleichzeitig an anderer Stelle Pulver entnommen oder zugeführt wird.

Zur Versorgung von mehreren Beschichtungspistolen sieht die Erfindung somit einen eigenen Meßbehälter 20-1 bis 20-n für jede Beschichtungspistole vor. Die Nachförderung des Pulvers für die Meßbehälter 20-1 bis 20-n erfolgt aus einem großen Vorratsbehälter 10. Die Meßbehälter 20-1 bis 20-n weisen, wie der Pulverbehälter 20 der Fig. 1, Drucksensoren, eine Fluidisiereinrichtung und eine Ansaugeinrichtung auf.

Um die erfindungsgemäße Einrichtung so einfach wie möglich zu gestalten, kann der Vorratsbehälter 10 über den Pulverbehältern 20, 20-1 bis 20-n angeordnet sein, so daß das Pulver vom Vorratsbehälter zum Meßbehälter durch die Wirkung der Schwerkraft fließen kann.

Bei einer weiteren, in den Figuren nicht gezeigten Ausführungsform Erfindung kann die Messung des Fluidisierdrucks in dem Pulverbehälter 20 mit Hilfe einer stabförmigen Tauchsonde durchgeführt werden. Die Sonde weist zwei Drucksensoren auf, von denen einer an ihrem unteren Ende und der andere an ihrem oberen Ende angebracht ist. Mit der Sonde wird der untere Drucksensor bis zum Behälterboden, gerade über der Fluidisiereinrichtung 20, in den Pulverbehälter 20 eingetaucht, während der obere Drucksensor knapp unter dem Behälterdekkel (nicht gezeigt) im oberen Bereich des Pulverbehälters 20 zu liegen kommt. Mit dieser Tauchsonde kann mithilfe einer geeigneten Auswerteelektronik der Differenzdruck in dem Pulverbehälter abgeleitet werden, der dem Fluidisierdruck entspricht. Aus dem Fluidisierungsdruck kann wiederum die Pulvermenge bzw. das Pulverniveau im Pulverbehälter 20 auf die oben beschriebene Weise abgeleitet werden. Anstelle der Drucksensoren können an der Tauchsonde auch Druckmeßleitung angebracht sein, die zu einem Differenzdrucksensor führen.

Der Vorteil dieser Ausführungsform der Erfindung ist, daß die erfindungsgemäße Meßvorrichtung in Verbindung mit jedem vorhandenen Pulverbehälter eingesetzt werden kann, ohne daß im Bereich der Behälterwand und insbesondere der empfindlichen Fluidisiereinrichtung Änderungen vorgenommen werden müssen.

Die in der vorstehenden Beschreibung, den Ansprüche und der Zeichnung offenbarten Merkmale können sowohl einzeln als auch in beliebiger Kombination für die Verwirklichung der Erfindung in ihren verschiedenen Ausführungsformen von Bedeutung sein.

## Patentansprüche

1. Verfahren zum Bestimmen einer Pulvermenge, die während eines Pulverbeschichtungsvorgangs aus einem Puvlerbehälter (20) abgegeben wird, wobei das Pulver in dem Behälter (20) fluidisiert wird, das Pulver aus dem Behälter (20) zu einem Pulverbeschichtungsgerät gefördert wird, der Druck des fluidisierten Pulvers in dem Behälter (20) in zeitlichen Abständen gemessen wird, die Änderung des Drucks während jeweils einen Meßintervalls ermittelt wird und aus der Druckänderung die Pulvermenge berechnet wird, die während des Meßintervalls aus dem Behälter (20) gefördert wurde.

2. Verfahren nach Anspruch 1, **dadurch gekennzeichnet, daß** aus der Druckänderung auch eine Höhenänderung des fluidisierten Pulvers in dem Behälter (20) abgeleitet wird.

3. Verfahren nach einem der vorangehenden Ansprüche, **dadurch gekennzeichnet, daß** der Behälter (20) einen Fluidisierboden (22) aufweist und der Druck in dem Behälter (20) unmittelbar über dem Fluidisierboden (22) gemessen wird.

4. Verfahren nach einem der vorangehenden Ansprüche, **dadurch gekennzeichnet, daß** der Druck des fluidisierten Pulvers in einem unteren Bereich des Behälters (20) und ein Referenzdruck in einem oberen Bereich des Behälters (20) erfaßt werden, aus den beiden Drücken ein Differenzdruck berechnet wird und aus dem Differenzdruck die Menge des fluidisierten Pulvers in dem Behälter (20) berechnet wird.

5. Verfahren nach Anspruch 4, **dadurch gekennzeichnet, daß** aus dem Differenzdruck auch die Höhe des fluidisierten Pulvers in dem Behälter (20) berechnet wird.

6. Verfahren nach Anspruch 4 oder 5, **dadurch gekennzeichnet, daß** dem Behälterboden gegenüberliegend ein Behälterdeckel angeordnet wird und der Referenzdruck knapp unter dem Behälterdeckel gemessen wird.

7. Verfahren nach einem der vorangehenden Ansprüche, **dadurch gekennzeichnet, daß** während der Förderung von Pulver aus dem Behälter (20) und Messung des Druckes dem Behälter (20) kein Pulver zugeführt wird.

8. Verfahren nach einem der vorangehenden Ansprüche, **dadurch gekennzeichnet, daß** die Pulvermenge abhängig von der Zusammensetzung des Pulvers berechnet wird.

9. Verfahren nach einem der vorangehenden Ansprüche, **dadurch gekennzeichnet, daß** das Pulver zu einem oder zu mehreren Beschichtungsgeräten gefördert wird.

10. Verfahren nach Anspruch 9, **dadurch gekennzeichnet, daß** jedem Beschichtungsgerät ein Meßbehälter (20-1 bis 20-n) zugeordnet wird, in dem das Pulver fluidisiert und der Druck des fluidisierten Pulvers gemessen wird.

11. Verfahren nach einem der vorangehenden Ansprüche, **dadurch gekennzeichnet, daß** eine bekannte Pulvermenge in den Behälter (20) gegeben wird und die Druckzunahme, die sich durch die Zugabe der bekannten Pulvermenge ergibt, gemessen wird, das sich ergebende Verhältnis aus bekannter Pulvermenge und Druckzunahme gespeichert wird und die Berechnung der Pulvermenge nachfolgend mit Hilfe des Verhältnisses aus bekannter Pulvermenge und Druckzunahme durchgeführt wird.

12. Verfahren nach einem der vorangehenden Ansprüche, **dadurch gekennzeichnet, daß** das Pulver aus dem Behälter (20) gefördert wird, bis das Pulverniveau im Behälter einen unteren Grenzwert erreicht, die Messung dann unterbrochen wird und Pulver in den Behälter (20) nachgefüllt wird, bis das Pulverniveau einen oberen Grenzwert erreicht.

13. Verfahren zum Regeln einer Pulverausstoßmenge, die von einem Pulverbeschichtungsgerät abgegeben wird, bei dem die von dem Pulverbeschichtungsgerät abgegebene Pulvermenge mit dem Verfahren nach einem der vorangehenden Ansprüche erfaßt wird und abhängig von der erfaßten Pulvermenge sowie einem Pulverausstoß-Sollwert die Förderung des Pulvers geregelt wird.

14. Vorrichtung zum Bestimmen einer Pulvermenge, die während eines Beschichtungsvorgangs aus einem Pulverbehälter an ein Pulverbeschichtungsgerät (20) abgegeben wird, mit dem Pulverbehälter (20), mit einer Fluidisiereinrichtung (22) in dem Behälter, einer Druckmeßeinrichtung (44) zum Messen des Drucks des fluidisierten Pulvers in dem Behälter, einer Fördereinrichtung (26,28,30) zum Fördern von Pulver aus dem Behälter, und einer Recheneinrichtung (40) zum Berechnen einer Änderung der Pulvermenge in dem Behälter (20) abhängig mehreren, zeitlich aufeinanderfolgenden Druckmessungen des fluidisierten Pulvers in dem Behälter (20).

15. Vorrichtung nach Anspruch 14, **dadurch gekennzeichnet, daß** die Druckmeßeinrichtung zwei Drucksensoren aufweist, die in dem Behälter (20) unmittelbar über der Fluidisiereinrichtung (22) bzw. in einem oberen Bereich des Behälters angeordnet sind, um eine Druckdifferenz in dem Behälter (20) zu messen, die durch das fluidisierte Pulver in dem Behälter (20) erzeugt wird.

16. Vorrichtung nach Anspruch 14 oder 15, **dadurch gekennzeichnet, daß** die Druckmeßeinrichtung einen Differenzdrucksensor (44) mit einer unteren und einer oberen Druckmeßleitung (36, 38) aufweist, um eine Druckdifferenz in dem Behälter (20) zu messen, die durch das fluidisierte Pulver in dem Behälter (20) erzeugt wird.

17. Vorrichtung nach einem der Ansprüche 14 bis 16, **dadurch gekennzeichnet, daß** die Druckmeßeinrichtung eine Tauchsonde aufweist, die an ihrem unteren und an ihrem oberen Ende jeweils einen Drucksensor oder eine Druckmeßleitung, die mit einem Differenzdrucksensor verbunden ist, aufweist, wobei die Tauchsonde in den Behälter (20) einbringbar ist, so daß der untere Sensor bzw. die untere Druckmeßleitung in dem Behälter unmittelbar über der Fluidisiereinrichtung (22) und der obere Sensor bzw. die obere Druckmeßleitung im oberen Bereich des Behälters (20) angeordnet ist.

18. Pulverbeschichtungseinrichtung mit wenigstens einem Beschichtungsgerät und einem Versorgungsbehälter (20-1 bis 20-n) für das Beschichtungsgerät sowie mit einer Vorrichtung nach einem der Ansprüche 14 bis 17, **dadurch gekennzeichnet, daß** die Vorrichtung dem Versorgungsbehälter (20-1 bis 20-n) zugeordnet ist, um die Pulvermenge zu ermitteln, die von der Fördereinrichtung aus dem Versorgungsbehälter zu dem Beschichtungsgerät gefördert wird.

19. Pulverbeschichtungseinrichtung nach Anspruch 18, **dadurch gekennzeichnet, daß** sie mehrere Beschichtungsgeräte aufweist und jedem Beschichtungsgerät genau ein Versorgungsbehälter (20-1 bis 20-n) und eine Vorrichtung zum Bestimmen der Pulvermenge zugeordnet ist.

20. Pulverbeschichtungseinrichtung nach Anspruch 18 oder 19, **gekennzeichnet durch** einen Pulvermengenausstoßregler, der abhängig von der ermittelten Pulvermenge und einem Pulverausstoß-Sollwert die Fördereinrichtung steuert.

## Claims

1. A method of determining a powder quantity which is discharged from a powder container (20) during a powder coating process, wherein the powder is fluidized in the container (20), the powder is supplied from the container (20) to a powder coating apparatus, the pressure of the fluidized powder is measured in the container (20) in time intervals, the change of the pressure during each measuring interval is determined and from the change in pressure the powder quantity is calculated which was supplied during the measuring interval from the container (20).

2. Method according to claim 1, **characterized in that** a change in height of the fluidized powder in the container (20) is also derived from the change in pressure.

3. Method according to one of the preceding claims, **characterized in that** the container (20) comprises a fluidization bottom (22) and the pressure is measured in the container (20) directly above the fluidization bottom (22).

4. Method according to one of the preceding claims, **characterized in that** the pressure of the fluidized powder is determined in a lower portion of the container (20) and a reference pressure is determined in an upper portion of the container (20), and a differential pressure is calculated from the two pressures, and the quantity of the fluidized powder in the container (20) is calculated from the differential pressure.

5. Method as claimed in claim 4, **characterized in that** the height of the powder fluidized in the container (20) is calculated from the differential pressure.

6. Method as claimed in claim 4 or 5, **characterized in that** a container cover is arranged opposite to the container, and the reference pressure is measured closely below the container cover.

7. Method according to one of the preceding claims, **characterized in that** no powder is supplied to the container (20) during the supply of powder from the container (20) and the measurement of the pressure.

8. Method according to one of the preceding claims, **characterized in that** the powder quantity is calculated in accordance with the composition of the powder.

9. Method according to one of the preceding claims, **characterized in that** the powder is supplied to one or to a plurality of coating apparatus.

10. Method as claimed in claim 9, **characterized in that** one measuring container (20-1 to 20-n) is assigned to each coating apparatus, the powder being fluidized and the pressure of the fluidized powder being measured in said measuring container.

11. Method according to one of the preceding claims, **characterized in that** a known powder quantity is filled into the container (20) and the increase in pressure, which results from the addition of the known powder quantity, is measured, the resulting ratio from the known powder quantity and pressure increase is stored and the calculation of the powder quantity is subsequently performed by means of the ratio of the known powder quantity and the pressure increase.

12. Method according to one of the preceding claims, **characterized in that** the powder is supplied from the container (20) until the powder level in the container reaches a lower threshold value, the measurement is then interrupted and powder is refilled into the container (20) until the powder level has reached an upper threshold value.

13. Method of controlling a powder spray quantity, that is discharged by the powder coating apparatus, wherein the powder quantity discharged from the powder coating apparatus is determined using the method of one of the preceding claims and the supply of the powder is controlled depending on the calculated powder quantity and a powder spray target value.

14. Device for determining a powder quantity which is discharged during a coating process from a powder container to a powder coating apparatus (20), comprising the powder container (20), a fluidization means (22) in the container, a pressure measuring means (44) for measuring the pressure of the fluidized powder in the container, a supply means (26, 28, 30) for supplying powder from the container, and a calculation means (40) for calculating a change of the powder quantity in the container (20) depending on a plurality of successive pressure measurements of the fluidized powder in the container (20).

15. Device as claimed in claim 14, **characterized in that** the pressure measuring means comprises two pressure sensors which are arranged in the container (20) directly above the fluidization means (22) or in an upper portion of the container to measure a pressure difference in the container (20) that is generated by the fluidized powder in the container (20).

16. Device as claimed in claim 14 or 15, **characterized in that** the pressure measuring means comprises a differential pressure sensor (44) comprising a lower and an upper pressure measuring line (36, 38), to measure a differential pressure in the container (20) that is generated by the fluidized powder in the container (20).

17. Device as claimed in one of claims 14 to 16, **characterized in that** the pressure measuring means comprises an immersion probe, which comprises at each of its lower and upper ends a pressure sensor, or which comprises a pressure measuring line which is connected to a differential pressure sensor, wherein the immersion probe can be inserted into the container (20) so that the lower sensor and the lower pressure measuring line in the container is arranged directly above the fluidization means (22) and the upper sensor or the upper pressure measuring line is arranged in the upper portion of the container (20).

18. Powder coating means comprising at least one coating apparatus and a supply container (20-1 to 20-n) for the coating apparatus, and including a device according to one of claims 14 to 17, **characterized in that** the device is associated to the supply container (20-1 to 20-n) to determine the powder quantity that is supplied from the supply means of the supply container to the coating apparatus.

19. Powder coating means as claimed in claim 18, **characterized in that** it comprises a plurality of coating apparatus and exactly one supply container (20-1 to 20-n) and one device for determining the powder quantity is associated to each coating apparatus.

20. Powder coating means as claimed in claim 18 or 19, **characterized by** a powder ejection controller which controls the supply means in accordance with the determined powder quantity and the powder ejection target value.

## Revendications

1. Procédé pour mesurer une quantité de poudre, qui est déchargée à partir d'un réservoir de poudre (20) pendant une opération de revêtement de poudre, dans lequel la poudre est fluidisée dans le réservoir (20), la poudre est transportée depuis le réservoir (20) jusqu'à un appareil de revêtement de poudre, la pression de la poudre fluidisée dans le réservoir (20) est mesurée à des intervalles de temps, le changement de la pression pendant chaque intervalle de mesure est déterminé et on calcule à partir du changement de la pression la quantité de poudre, qui a été transportée hors du réservoir (20) pendant l'intervalle de mesure.

2. Procédé selon la revendication 1, **caractérisé en ce que** l'on déduit aussi du changement de la pression un changement de hauteur de la poudre fluidisée dans le réservoir (20).

3. Procédé selon l'une quelconque des revendications précédentes, **caractérisé en ce que** le réservoir (20) présente un fond fluidisé (22) et la pression dans le réservoir (20) est mesurée immédiatement au-dessus du fond fluidisé (22).

4. Procédé selon l'une quelconque des revendications précédentes, **caractérisé en ce que** l'on mesure la pression de la poudre fluidisée dans une région inférieure du réservoir (20) et une pression de référence dans une région supérieure du réservoir (20), on calcule une différence de pression à partir des deux pressions et on calcule à partir de cette différence de pression la quantité de poudre fluidisée dans le réservoir (20).

5. Procédé selon la revendication 4, **caractérisé en ce que** l'on calcule également à partir de la différence de pression la hauteur de la poudre fluidisée dans le réservoir (20).

6. Procédé selon la revendication 4 ou 5, **caractérisé en ce qu'**un couvercle de réservoir est disposé en face du fond du réservoir et on mesure la pression de référence juste en dessous du couvercle de réservoir.

7. Procédé selon l'une quelconque des revendications précédentes, **caractérisé en ce que** l'on n'ajoute pas de poudre dans le réservoir pendant le transport de poudre hors du réservoir (20) et pendant la mesure de la pression.

8. Procédé selon l'une quelconque des revendications précédentes, **caractérisé en ce que** l'on calcule la quantité de poudre en fonction de la composition de la poudre.

9. Procédé selon l'une quelconque des revendications précédentes, **caractérisé en ce que** l'on transporte la poudre vers un ou plusieurs appareils de revêtement.

10. Procédé selon la revendication 9, **caractérisé en ce qu'**à chaque appareil de revêtement est associé un réservoir de mesure (20-1 à 20-n), dans lequel la poudre est fluidisée et la pression de la poudre fluidisée est mesurée.

11. Procédé selon l'une quelconque des revendications précédentes, **caractérisé en ce que** l'on charge une quantité connue de poudre dans le réservoir (20) et on mesure l'augmentation de pression qui résulte de l'addition de la quantité connue de poudre, on mémorise le rapport résultant entre la quantité connue de poudre et l'augmentation de pression, et on effectue ensuite le calcul de la quantité de poudre à l'aide du rapport entre la quantité connue de poudre et l'augmentation de pression.

12. Procédé selon l'une quelconque des revendications précédentes, **caractérisé en ce que** l'on transporte la poudre hors du réservoir (20) jusqu'à ce que le niveau de la poudre dans le réservoir atteigne une valeur limite inférieure, on interrompt alors la mesure et on ajoute à nouveau de la poudre dans le réservoir (20) jusqu'à ce que le niveau de la poudre atteigne une valeur limite supérieure.

13. Procédé pour réguler une quantité d'expulsion de poudre, qui est déchargée d'un appareil de revêtement de poudre, dans lequel on détermine la quantité de poudre déchargée de l'appareil de revêtement de poudre par le procédé selon l'une quelconque des revendications précédentes et on régule le transport de la poudre en fonction de la quantité de poudre déterminée ainsi que d'une valeur de consigne de l'expulsion de poudre.

14. Dispositif pour mesurer une quantité de poudre, qui est déchargée hors d'un réservoir de poudre à un appareil de revêtement de poudre (20) pendant une opération de revêtement, avec le réservoir de poudre (20), avec un dispositif de fluidisation (22) dans le réservoir, un dispositif de mesure de la pression (44) pour mesurer la pression de la poudre fluidisée dans le réservoir, un dispositif de transport (26, 28, 30) pour transporter de la poudre hors du réservoir, et un dispositif de calcul (40) pour calculer un changement de la quantité de poudre dans le réservoir (20) en fonction de plusieurs mesures de pression, se succédant dans le temps, de la poudre fluidisée dans le réservoir (20).

15. Dispositif selon la revendication 14, **caractérisé en ce que** le dispositif de mesure de la pression présente deux capteurs de pression, qui sont disposés dans le réservoir (20) immédiatement au-dessus du dispositif de fluidisation (22) respectivement dans une région supérieure du réservoir, afin de mesurer une différence de pression dans le réservoir (20), qui est produite par la poudre fluidisée dans le réservoir (20).

16. Dispositif selon la revendication 14 ou 15, **caractérisé en ce que** le dispositif de mesure de la pression présente un capteur de différence de pression (44) avec une conduite inférieure et une conduite supérieure de mesure de la pression (36, 38), afin de mesurer une différence de pression dans le réservoir (20), qui est produite par la poudre fluidisée dans le réservoir (20).

17. Dispositif selon l'une quelconque des revendications 14 à 16, **caractérisé en ce que** le dispositif de mesure de la pression présente une sonde immergée, qui présente chaque fois à ses extrémités inférieure et supérieure un capteur de pression ou une conduite de mesure de la pression, qui est raccordée à un capteur de différence de pression, la sonde immergée pouvant être introduite dans le réservoir (20), de telle façon que le capteur inférieur, respectivement la conduite inférieure de mesure de la pression, soit disposé dans le réservoir immédiatement au-dessus du dispositif de fluidisation (22) et que le capteur supérieur, respectivement la conduite supérieure de mesure de la pression, soit disposé dans la région supérieure du réservoir (20).

18. Dispositif de revêtement de poudre avec au moins un appareil de revêtement et un réservoir d'alimentation (20-1 à 20-n) pour l'appareil de revêtement ainsi qu'avec un dispositif selon l'une quelconque des revendications 14 à 17, **caractérisé en ce que** le dispositif est associé au réservoir d'alimentation (20-1 à 20-n) pour déterminer la quantité de poudre qui est transportée par le dispositif de transport du réservoir d'alimentation à l'appareil de revêtement.

19. Dispositif de revêtement de poudre selon la revendication 18, **caractérisé en ce qu'**il comporte plusieurs appareils de revêtement et un réservoir d'alimentation (20-1 à 20-n) et un dispositif pour mesurer la quantité de poudre est associé précisément à chaque appareil de revêtement.

20. Dispositif de revêtement de poudre selon la revendication 18 ou 19, **caractérisé par** un régulateur d'expulsion de quantité de poudre, qui commande le dispositif de transport en fonction de la quantité de poudre déterminée et d'une valeur de consigne de l'expulsion de poudre.
